# EUROPÄISCHE PATENTSCHRIFT

(11) **EP 3 443 223 B1**
(45) Veröffentlichungstag und Bekanntmachung des Hinweises auf die Patenterteilung: **09.03.2022**
(21) Anmeldenummer: 17717374.7
(22) Anmeldetag: 10.04.2017
(51) Int. Cl.: F03D 7/02, F03D 15/20

(54) **VERFAHREN ZUM BETREIBEN EINER WINDENERGIEANLAGE**
METHOD FOR OPERATING A WIND TURBINE
PROCÉDÉ POUR FAIRE FONCTIONNER UNE ÉOLIENNE

(30) Priorität: 11.04.2016 DE 102016106590
(43) Veröffentlichungstag der Anmeldung: 20.02.2019
(73) Patentinhaber: Wobben Properties GmbH, 26607 Aurich (DE)
(72) Erfinder: MESSING, Ralf, 26605 Aurich (DE); WORTELKER, Rainer, 26725 Emden (DE); NOFFKE, Nils, 26607 Aurich (DE); FRAUENLOB, Marwin, 47533 Kleve (DE); NAPIERALA, Christian Frank, 26603 Aurich (DE)
(74) Vertreter: Eisenführ Speiser
(86) Internationale Anmeldenummer: PCT/EP2017/058553
(87) Internationale Veröffentlichungsnummer: WO 2017/178429

(56) Entgegenhaltungen:
- EP-A1- 2 463 517

## Beschreibung

Die vorliegende Erfindung betrifft ein Verfahren zum Betreiben einer Windenergieanlage und es betrifft eine Windenergieanlage.

Windenergieanlagen sind bekannt und werden heutzutage häufig aufgestellt. Es kann vorkommen, dass von Windenergieanlagen erzeugter Schall unerwünscht ist oder als unerwünscht empfunden wird und in Folge dessen niedrige Schallleistungspegel vorgegeben werden.

Bisher ist es so, dass zum Erreichen von niedrigen Schallleistungspegeln leistungsreduzierte Betriebsmodi angewendet werden. Dadurch wird die Betriebskennlinie, also die Vorgabe der elektrischen Ausgangsleistung in Abhängigkeit der Generatordrehzahl, die bei getriebelosen Maschinen identisch mit der Rotordrehzahl ist, des leistungsoptimierten Betriebsmodus so lange abgefahren, bis die Nennleistung des leistungsreduzierten Betriebsmodus erreicht ist. Die dann dort nach dem Betriebsmodus vorliegende Drehzahl kann als Nenndrehzahl des leistungsreduzierten Betriebsmodus bezeichnet werden. Diese reduzierte Nenndrehzahl legt hauptursächlich den auftretenden Schallleistungspegel der Windenergieanlage fest.

Vorteilhaft an dieser Vorgehensweise ist, dass die Windenergieanlage im Teillastbetrieb größtmöglich auf der optimalen Schnelllaufzahl betrieben werden kann und auch sonst die Anlage wie im Normalbetrieb, also im Betrieb ohne Vorgabe eines begrenzten Schallleistungspegels betrieben werden kann. Es braucht nur beachtet zu werden, dass der geforderte Grenzwert nicht überschritten wird. Dadurch kann auch eine ablösefreie Umströmung des Rotorblatts sichergestellt werden, wenn die Windenergieanlage ansonsten in gewohnter Weise betrieben wird. Nachteilig hierbei ist natürlich, dass die Anlage im leistungsreduzierten Betrieb nicht ertragsoptimal betrieben wird und sich somit hohe Ertragsverluste einstellen können, wenn die Anlage im leistungsreduzierten Modus betrieben werden muss, um restriktivere Schallemissionsanforderungen gegenüber einem Betrieb im Normalbetrieb, bspw. in der Nacht, einzuhalten.

Das Deutsche Patent- und Markenamt hat in der Prioritätsanmeldung zur vorliegenden Anmeldung folgenden Stand der Technik recherchiert: US 2013/0 154 263 A1, US 2010/ 0 135 798 A1 und US 2013/0 140 818 A1.

Ein weiteres Dokument aus dem Stand der Technik ist EP 2 463 517 A1.

Der vorliegenden Erfindung liegt somit die Aufgabe zugrunde, wenigstens eines der genannten Probleme zu adressieren. Insbesondere soll bei Einhaltung von Schallemissionsanforderungen ein möglichst hoher Ertrag erreicht werden. Zumindest soll gegenüber bisher Bekannten eine alternative Lösung vorgeschlagen werden.

Erfindungsgemäß wird ein Verfahren gemäß Anspruch 1 vorgeschlagen.

Eine Idee der Erfindung ist es somit, die Betriebsführung so zu modifizieren, dass sich die reduzierte Nenndrehzahl und somit der Schallleistungspegel nicht ändert, die bei der reduzierten Nenndrehzahl vorliegende reduzierte Nennleistung jedoch angehoben wird und somit auch der Anlagenertrag angehoben wird.

Dazu wird erfindungsgemäß von einem Verfahren zum Betreiben einer Windenergieanlagen ausgegangen, die einen Rotor mit Rotorblättern aufweist, die in ihrem Blattwinkel verstellbar sind. Dabei ist vorgesehen, dass die Windenergieanlage zum Abgeben einer anlagenspezifischen Maximalleistung in einem Volllastbetrieb und zum Abgeben einer geringeren Leistung bis zu dieser anlagenspezifischen Maximalleistung in einem Teillastbetrieb betrieben wird. Die anlagenspezifische Maximalleistung ist üblicherweise die Nennleistung der Windenergieanlage. Der Bereich, in dem die Windenergieanlage im Volllastbetrieb betrieben wird und der Bereich, in dem die Windenergieanlage im Teillastbetrieb betrieben wird, kann auch als Volllastbereich bzw. als Teillastbereich bezeichnet werden. Vereinfacht ausgedrückt, reicht der Teillastbereich von einer Einschaltwindgeschwindigkeit, bei der die Windenergieanlage ihren Betrieb überhaupt erst aufnimmt, bis zu einer Nennwindgeschwindigkeit. Der Volllastbereich schließt sich entsprechend daran für höhere Windgeschwindigkeiten an. Die Beschreibung der Erfindung bezieht sich im Wesentlichen auf den Teillastbereich bzw. den Teillastbetrieb. Es ist nun für den Teillastbetrieb weiterhin vorgesehen, dass die Windenergieanlage wahlweise in einem Normalbetrieb oder einen begrenzten Betrieb arbeitet. Das sind somit zwei Betriebsarten, die sich aber beide auf den Teillastbereich beziehen. Für jeden dieser beiden Betriebsarten, also dem Normalbetrieb und dem begrenzten Betrieb, wird jeweils eine Betriebskennlinie zugrundegelegt, die einen Zusammenhang zwischen einer Drehzahl des Rotors und der abzugebenden Leistung vorgibt. Bei getriebelosen Windenergieanlagen entspricht das einer Vorgabe der elektrischen Ausgangsleistung in Abhängigkeit der Generatordrehzahl. Liegen Getriebe vor, kann die Generatordrehzahl zugrundegelegt werden, oder es kann eine Umrechnung mit einem Faktor entsprechend dem Übersetzungsverhältnis des Getriebes vorgenommen werden.

Eine Betriebskennlinie gibt insoweit einen Zusammenhang zwischen Drehzahl und Leistung wieder. Dieser Zusammenhang wird klassischerweise in einer Kennlinie hinterlegt, kann aber auch funktional definiert werden. Je nach Prozessrechner können dafür Funktionen höherer Ordnung, nicht lineare Funktionen, Polynomfunktionen und/oder zusammengesetzte Funktionen in Betracht kommen. Entscheidend ist, dass ein Zusammenhang zwischen Drehzahl und Leistung hinterlegt ist. Gleiches gilt übrigens auch für eine leistungsabhängige Blattwinkelkennlinie.

Es wird nun weiter vorgeschlagen, dass zum Betreiben der Windenergieanlage in dem Normalbetrieb eine erste Betriebskennlinie vorgesehen ist und zum Betreiben der Windenergieanlage in dem begrenzten Betrieb wenigstens eine zweite Betriebskennlinie vorgesehen ist. Es können auch weitere Betriebskennlinien vorgesehen sein, besonders dann, wenn unterschiedliche Begrenzungen zu berücksichtigen wären. Zum Verständnis der Erfindung sollte aber die Betrachtung einer zweiten Betriebskennlinie ausreichen, zumal ohnehin die Windenergieanlage nur mit einer Betriebskennlinie zurzeit betrieben werden kann.

Es wird nun vorgeschlagen, dass die zweite Betriebskennline, die also für den begrenzten Betrieb verwendet wird, für wenigstens einen Drehzahlbereich eine höhere Leistung vorsieht, als die erste Betriebskennlinie für denselben Drehzahlbereich.

Es wird somit für den begrenzten Betrieb, der nämlich insbesondere begrenzt ist, um eine Schallemissionsanforderung einzuhalten, eine höhere Leistung vorgesehen. Dabei ist zu beachten, dass dafür die Betriebskennlinie zumindest abschnittsweise gegenüber der des Normalbetriebs geändert ist. Es geht also nicht darum, für einen einzelnen Drehzahlwert eine höhere Leistung vorzusehen, sondern die Betriebskennlinie generell zu ändern und somit eine höhere Leistung wenigstens für einen ganzen Drehzahlbereich vorzusehen.

Es ist auch wichtig zu beachten, dass diesen gleichen Drehzahlbereichen der beiden Betriebskennlinien, die aber unterschiedliche Leistungen aufweisen sollen, nicht identische Windgeschwindigkeiten zugrundeliegen. Es wird schließlich davon ausgegangen, dass im Normalbetrieb im Teillastbetrieb dem Wind die maximal entnehmbare Leistung auch, zumindest im optimalen Fall, entnommen wird. Entsprechend dürfte es schwierig sein, die Leistung bei derselben Windgeschwindigkeit nun noch weiter zu erhöhen.

Stattdessen geht es um die Betriebsführung der Windenergieanlage. Das beanspruchte Verfahren zum Betreiben einer Windenergieanlage ist daher eine entsprechende Betriebsführung der Windenergieanlage. Es werden also unterschiedliche Drehzahl-Leistungskennlinien vorgegeben. In der praktischen Umsetzung kann das, um ein anschauliches Beispiel zu nennen, so aussehen, dass der Wind die Windenergieanlage mit einer gewissen Drehzahl dreht. Abhängig von dieser Drehzahl wird dann entsprechend der jeweiligen Betriebskennlinie eine Leistung eingestellt. Entspricht diese Leistung genau der Leistung, die in dem Moment mit den Einstellungen dem Wind entnommen werden kann, befindet sich die Windenergieanlage in einem stationären Betriebszustand. Kann diese Leistung in dem Moment aber nicht entnommen werden, wurde also quasi zu hoch eingestellt, führt dies dazu, dass sich die Drehzahl reduziert. Es wird dann entsprechend der reduzierten Drehzahl auch eine neue, nämlich reduzierte Leistung eingestellt, bis dies der entnehmbaren Leistung entspricht und ein stationärer Betriebszustand erreicht ist. Ist die Leistung zu niedrig eingestellt, wird sich entsprechend die Drehzahl erhöhen und die Leistung wird dann auch erhöht, bis ein entsprechend höherer Betriebspunkt erreicht ist.

Dieser Vorgang kann aber für unterschiedliche Betriebskennlinien durchgeführt werden. Da die abgegebene Leistung der dem Wind entnehmbaren Leistung entspricht, ist eine höhere Leistung auch einem stärkeren Wind zu zuordnen. Weil die zweite Betriebskennlinie zumindest abschnittsweise für einen Drehzahlbereich eine höhere Leistung als die erste Betriebskennlinie aufweist, liegt auch ein stärkerer Wind zugrunde. Entsprechend ist der genannten Drehzahlbereich der zweiten Betriebskennline einer höheren Windgeschwindigkeit zugeordnet als derselbe Drehzahlbereich der ersten Betriebskennlinie.

Dies dient aber nur der Erläuterung und die Betriebsführung arbeitet stattdessen wie beschrieben so, dass sie die Betriebskennlinie zugrundelegt und entsprechend abhängig der Drehzahl eine Leistung einstellt. Die Windgeschwindigkeit muss hierbei nicht betrachtet werden, auch wenn sie natürlich notwendig ist, um die Windenergieanlage zu betreiben.

Somit kann erreicht werden, dass die Leistung bei dem begrenzten Betrieb schon bei niedrigeren Drehzahlen erhöht wird, wodurch eine möglichst hohe Leistung erzeugt wird, bzw. ein Betriebspunkt mit möglichst hoher erzeugter Leistung erreicht wird, bevor die vorgegebene Grenze der Schallemission, was insbesondere eine Obergrenze der dabei zulässigen Drehzahl ist, erreicht wird. Die Leistung ist also auf einem möglichst hohen Wert, wenn diese Grenze erreicht wird.

Dabei wurde auch erkannt, dass die veränderte Betriebskennlinie zwar in der Gesamtheit betrachtet nicht den optimalen Betrieb der Anlag darstellen muss, aber dass erreicht wird, dass in dieser besonderen Situation der Begrenzung möglichst viel Leistung erzeugt wird.

Eine Ausgestaltung schlägt vor, dass für den Normalbetrieb eine erste Leistungs-Blattwinkelkennlinie und für den reduzierten Betrieb eine zweite Leistungs-Blattwinkelkennlinie vorgesehen sind und die erste Leistungs-Blattwinkelkennlinie im Normalbetrieb zusammen mit der ersten Betriebskennlinie ausgewählt wird und die zweite Leistungs-Blattwinkelkennlinie im begrenzten Betrieb zusammen mit der zweiten Betriebskennlinie ausgewählt wird.

Es wurde erkannt, dass die vorgeschlagenen unterschiedlichen Betriebskennlinien, also die unterschiedlichen Drehzahl-Leistungskennlinien, besonders dadurch vorgesehen werden können, dass jeder Drehzahl-Leistungskennlinie eine Leistungs-Blattwinkelkennlinie zugeordnet ist. Besonders dadurch ist es möglich, bei gleichen Windgeschwindigkeiten unterschiedliche Drehzahlen einzustellen.

Vorzugsweise werden die erste und die zweite Leistungs-Blattwinkelkennlinie so vorgegeben, dass ein Profilanstellwinkel einen vorbestimmten Wert nicht überschreitet. Ein Profilanstellwinkel ist der Winkel, der sich zwischen der Sehne eines Profils und einer lokalen Anströmung einstellt. Dieser hängt von der Windgeschwindigkeit und der Umfangsgeschwindigkeit des Rotors ab. Durch die unterschiedlichen Drehzahl-Leistungskennlinien ergeben sich auch für gleiche Windgeschwindigkeiten unterschiedliche Drehzahlen und damit unterschiedliche Anströmwinkel. Dies wird durch unterschiedliche Drehzahl-Blattkennlinien ausgeglichen.

Es wird hier vorgeschlagen, dass die erste und die zweite Leistungs-Blattwinkelkennlinie so vorgegeben werden, dass kein Profilanstellwinkel einen vorbestimmten Wert überschreitet. Vorzugsweise kann das besonders für einen mittleren Bereich des Rotorblattes vorgesehen sein, der sich etwa über einen Bereich von 30% bis 80% entlang der Rotorblattlängsachse erstreckt.

Gemäß einer Ausführungsform wird vorgeschlagen, dass im Teillastbetrieb wenigstens ein erster und ein zweiter Drehzahlbereich vorgesehen sind. Mit anderen Worten ist der Teillastbereich in zwei Drehzahlbereiche unterteilbar, nämlich einen niedrigen und einen hohen. Beide Drehzahlbereiche sind aber noch, da sie im Teillastbereich sind, vor dem Vollastbereich angeordnet. Der erste Drehzahlbereich umfasst Drehzahlen bis zu einer ersten Bereichsdrehzahl, er umfasst also die niedrigen Drehzahlen, und der zweite Drehzahlbereich umfasst Drehzahlen oberhalb dieser ersten Bereichsdrehzahl, also höhere Drehzahlen. Hierfür wird nun vorgeschlagen, dass die erste und die zweite Betriebskennlinie in dem ersten Drehzahlbereich übereinstimmen und die zweite Betriebskennline in dem zweiten Drehzahlbereich von der ersten Betriebskennlinie so abweicht, dass sie für gleiche Drehzahlwerte jeweils größere Leistungswerte vorgibt, als die erste Betriebskennline zu denselben Drehzahlwerten. Mit anderen Worten verlässt die zweite Betriebskennlinie die erste Betriebskennlinie in dem zweiten Drehzahlbereich nach oben, trägt man diese Kennlinien in einem Diagramm ab, dass die Drehzahl an der Abszisse und davon abhängig die Leistung an der Ordinate aufträgt.

Es wurde somit erkannt, dass für beide Betriebsarten, also Normalbetrieb und begrenzter Betrieb, zunächst, also bei niedrigen Drehzahlen und damit auch bei niedrigen Windgeschwindigkeiten, auf gleiche Art und Weise betrieben werden können. In diesem Bereich übereinstimmender Betriebskennlinien liegt entsprechend auch jeweils dieselbe Windgeschwindigkeit zugrunde. Erst bei höheren Drehzahlen kann dann die unterschiedliche Betriebsweise vorgenommen werden. Bei den niedrigen Drehzahlen und damit niedrigen Windgeschwindigkeiten ist somit auch für den begrenzten Betrieb eine möglichst optimale Betriebsweise durchführbar.

Vorzugsweise liegt bei dem begrenzten Betrieb eine Situation zugrunde, bei der die Drehzahl einen vorgegebenen Drehzahlgrenzwert nicht überschreiten darf. Insbesondere ist das der Fall, wenn die Drehzahl auf eine reduzierte Nenndrehzahl begrenzt ist, wie sie oben bereits beschrieben wurde. Entsprechend ist die zweite Betriebskennlinie nur bis zu diesem Drehzahlgrenzwert vorgesehen. Sie kann aber auch weiter vorgesehen sein, dafür aber über diese Drehzahlgrenze hinweg nicht, zumindest nicht dauerhaft, betrieben werden, wenn dieser begrenzte Betrieb vorliegt. Das kann bspw. eine für nachts vorgesehene begrenzte Schallemission sein. Dabei sieht die zweite Betriebskennlinie vor, bereits für Drehzahlen unterhalb dieses Drehzahlgrenzwertes eine höhere Leistung vorzusehen, als dies die erste Betriebskennlinie macht. Besonders ist hier hervorzuheben, dass sich die zweite Betriebskennlinie von der ersten Betriebskennline nicht nur in dem Drehzahlgrenzwert von der ersten Betriebskennlinie unterscheidet, sondern dass bereits deutlich vorher ein anderer Betrieb, also eine andere Betriebsführung, vorgesehen ist.

Gemäß einer Ausgestaltung wird vorgeschlagen, dass der Normalbetrieb und der begrenzte Betrieb jeweils durch einen Verlauf der Schnelllaufzahl in Abhängigkeit der Windgeschwindigkeit charakterisiert sind. Eine solche Charakterisierung durch den Verlauf der Schnelllaufzahl kann generell vorgesehen sein. Hier wird vorgeschlagen, dass der Verlauf der Schnelllaufzahl des Normalbetriebs zumindest abschnittsweise oberhalb des Verlaufs der Schnelllaufzahl des begrenzten Betriebs liegt. In diesem Abschnitt ist also die Schnelllaufzahl des Normalbetriebs für die zugrundeliegende Windgeschwindigkeit größer als für den begrenzten Betrieb.

Damit wird deutlich, dass gemäß dieser Ausführungsform vorgeschlagen wird, die aerodynamische Situation für den Normalbetrieb einerseits und den begrenzten Betrieb andererseits grundlegend anders zu gestalten. Vorzugsweise ist der Verlauf der Schnelllaufzahl für den Normalbetrieb und den begrenzten Betrieb für niedrige Windgeschwindigkeiten gleich und unterscheidet sich erst ab einer vorbestimmten Windgeschwindigkeit, ab der dann die Schnelllaufzahl des Normalbetriebs größer ist, als die des begrenzten Betriebs. Die Schnelllaufzahl ist das Verhältnis der Umfangsgeschwindigkeit des Rotors der Windenergieanlage zur Windgeschwindigkeit. Bei einer rein normierten oder nur vergleichenden Betrachtung kann auch das Verhältnis der Drehzahl des Rotors zur Windgeschwindigkeit betrachtet werden. Die vorgeschlagene höhere Schnelllaufzahl des Normalbetriebs deutet somit auch darauf hin, dass dort die Anlage im Normalbetrieb mit einer höheren Drehzahl betrieben wird, als das bei derselben Windgeschwindigkeit im begrenzten Betrieb der Fall ist.

Gemäß einer Ausführungsform wird vorgeschlagen, dass wenigstens für den begrenzten Betrieb ein Verstellen des Blattwinkels vor Erreichen des Drehzahlgrenzwertes vorgesehen ist. Liegt also als vorgegebene Begrenzung eine begrenzte Drehzahl vor, die der begrenzte Betrieb berücksichtigen muss, wird vorgeschlagen, dass bereits vor Erreichen dieses Drehzahlgrenzwertes das Rotorblatt etwas aus dem Wind gedreht wird, sein Blattwinkel also erhöht wird. Rein vorsorglich wird darauf hingewiesen, dass hier die Erhöhung des Blattwinkels eine Verstellung in Richtung des Rotorblatts zur Fahnenstellung hin bedeutet.

Mit diesem Vorschlag, den Blattwinkel vor Erreichen des Drehzahlgrenzwertes zu verstellen, kann auch die vorgeschlagene geringere Schnelllaufzahl realisiert werden. Mit dieser Veränderung des Blattwinkels kann sich die Drehzahl verringern, was bei gleichem Wind zu einer Verringerung der Schnelllaufzahl führt. Dieses Verstellen des Blattwinkels besonders für den begrenzten Betrieb ist vorzugsweise auf die zweite Betriebskennlinie abgestimmt bzw. die zweite Betriebskennlinie ist auf dieses frühzeitige Verstellen des Blattwinkels abgestimmt. Durch diese Kombination der entsprechenden zweiten Betriebskennlinie und des Verstellens des Blattwinkels kann besonders gut auch die Idee verwirklicht werden, dass die Betriebsführung so modifiziert wird, dass sich die reduzierte Nenndrehzahl und somit der Schallleistungspegel nicht ändert bzw. nicht überschritten wird, die bei der reduzierten Nenndrehzahl vorliegende Leistung, also erzeugbare Leistung, angehoben wird und somit trotz Einhaltung der Vorgaben eine Ertragserhöhung erreicht werden kann.

Gemäß einer weiteren Ausgestaltung wird vorgeschlagen, dass beim Betreiben der Windenergieanlage im Normalbetrieb bis zu einer ersten Referenzwindgeschwindigkeit oder bis zum Erreichen einer ersten Referenzdrehzahl der Blattwinkel einen konstanten Wert aufweist und dann mit weiter steigender Windgeschwindigkeit bzw. mit weiter steigender Drehzahl und auch in Abhängigkeit der Windgeschwindigkeit bzw. in Abhängigkeit der Drehzahl der Blattwinkel erhöht wird. Das gleiche wird beim Betreiben der Windenergieanlage im begrenzten Betrieb vorgeschlagen, allerdings in Bezug auf eine zweite Referenzgeschwindigkeit bzw. in Bezug auf eine zweite Referenzdrehzahl. Dabei wird vorgeschlagen, dass die erste Referenzgeschwindigkeit größer ist als die zweite Referenzgeschwindigkeit bzw. dass die erste Referenzdrehzahl größer ist als die zweite Referenzdrehzahl. Es wird somit vorgeschlagen, dass auch im Normalbetrieb bereits im Teillastbereich der Blattwinkel verstellt werden kann, dass aber eine Verstellung des Blattwinkels in dem begrenzten Betrieb eher erfolgt. Besonders wird damit erreicht, dass im Normalbetrieb noch möglichst lange oder zumindest etwas länger ein optimaler Betrieb ohne Blattverstellung durchgeführt wird, wohingegen für den begrenzten Betrieb schon frühzeitig dieser optimale Betrieb verlassen wird, um die vorgegebene Grenze, insbesondere den Drehzahlgrenzwert anzusteuern und damit trotz Grenze einen möglichst hohen Ertrag zu erzielen.

Gemäß einer weiteren Ausführungsform wird vorgeschlagen, dass die erste Betriebskennlinie dazu vorbereitet ist, die Windenergieanlage zu einem Betriebspunkt mit Nennleistung zu führen und in einem Abschnitt vor oder bis zu diesem Betriebspunkt einen ersten Leistungsgradienten dP/dn aufweist. In ähnlicher Weise wird für die zweite Betriebskennlinie vorgeschlagen, dass diese dazu vorbereitet ist, die Windenergieanlagen zu einem reduzierten Betriebspunkt mit im Vergleich zur Nennleistung reduzierter Leistung zu führen und in einem Abschnitt vor oder bis zu diesem reduzierten Betriebspunkt einen zweiten Leistungsgradienten dP/dn aufzuweisen. Diese beiden Leistungsgradienten bezeichnen somit eine Änderung der Leistung in Bezug auf eine Änderung der Drehzahl, also eine Leistungssteigung in Bezug auf die Drehzahlerhöhung. Mathematisch korrekt ist dies als dP/dn zu bezeichnen, wobei P die Leistung ist und n die Drehzahl ist.

Hierfür wird nun vorgeschlagen, dass die beiden Leistungsgradienten gleich sind. Beide Betriebskennlinien steuern also unterschiedliche Betriebspunkte an, nämlich den Betriebspunkt mit Nennleistung bzw. den reduzierten Betriebspunkt mit reduzierter Leistung, weisen gleichwohl einen gleichen Leistungsgradienten auf. Damit kann erreicht werden, dass beide Betriebskennlinien in ähnlicher Art und Weise jeweils ihren Betriebspunkt erreichen können. Dabei übernimmt vorzugsweise die zweite Betriebskennlinie den ersten Leistungsgradienten als zweiten Leistungsgradienten und die zugrundeliegende Anlagensteuerung der ersten Betriebskennlinie, also des Normalbetriebs, wird hiermit auf die zweite Betriebskennlinie übertragen. Damit kann trotz des reduzierten Betriebspunktes der zweiten Betriebskennlinie eine ähnliche Steuerung von der ersten Betriebskennlinie adaptiert werden.

Natürlich können hier auch Variationen vorgesehen werden, bei denen bspw. der zweite Leistungsgradient um 10 %, um nur ein Beispiel zu nennen, von dem ersten Leistungsgradient abweichen. Vorgeschlagen wird, dass diese Leistungsgradienten gleich sind, wenn aber kleine Abweichungen vorliegen, kann die zugrundeliegende Idee gleichwohl noch erreicht werden, zumindest teilweise.

Vorzugsweise ist das Verfahren dadurch gekennzeichnet, dass zum Steuern der Windenergieanlage im Teillastbetrieb mittels eines Drehzahl-Leistungsreglers eine von der Windenergieanlage zu erzeugende Leistung (P) in Abhängigkeit einer erfassten Drehzahl (n) vorgegeben wird und die von dem Drehzahl-Leistungsregler vorgegebene Leistung an ein Leistungsstellmittel der Windenergieanlage gegeben wird, um diese vorgegebene Leistung einzustellen.

Hier wird besonders eine Drehzahl-Leistungskennlinie hinterlegt, die einen festen Zusammenhang zwischen Drehzahl und Leistung vorgibt. Abhängig der erfassten Drehzahl gibt dieser Drehzahl-Leistungsregler eine Leistung aus, die mittels des Leistungsstellmittels eingestellt wird. Das Leistungsstellmittel kann bspw. ein Stellmittel zum Einstellen eines Erregerstroms eines fremderregten Synchrongenerators sein. Eine Rückführung der eingestellten Leistung ist nicht vorgesehen. Vielmehr führt dieser Drehzahl-Leistungsregler dazu, dass sich ein Drehzahl-Leistungs-Betriebspunkt einstellt. Eine Veränderung der Leistung wirkt sich nämlich auch auf ein Gegenmoment des Rotors aus, wodurch dieser stärker oder schwächer als vor der Änderung gebremst wird, was wiederum Einfluss auf die Drehzahl hat.

Weiterhin wird dazu vorgeschlagen, dass mittels eines Leistungs-Blattwinkelreglers der einzustellende Blattwinkel in Abhängigkeit der von dem Drehzahl-Leistungsregler vorgegebenen Leistung, oder in Abhängigkeit der von dem Leistungsstellmittel eingestellten Leistung vorgegeben wird und der so vorgegebene Blattwinkel zum Verstellen der Rotorblätter an Blattverstelleinheiten der Windenergieanlage gegeben wird. Dazu kann in dem Leistungs-Blattwinkelregler eine Leistung-Blattwinkelkennlinie hinterlegt sein, so dass zu jedem eingegebenen Leistungswert ein Blattwinkel gemäß dem durch die Kennlinie fest hinterlegten Zusammenhang ausgegeben wird. Diese Kennlinie kann auch so ausgestaltet sein, dass sich für kleinere Leistungswerte die Blattwinkel nicht ändern und erst bei höheren Leistungswerten der Blattwinkel verändert wird.

Wird hier die von dem Drehzahl-Leistungsregler vorgegebene Leistung als Eingangsgröße verwendet, kann auch in Kombination mit dem Drehzahl-Leistungsregler ein eindeutiger Zusammenhang zwischen Drehzahl und Blattwinkel hergestellt werden. Wird die tatsächlich eingestellte Leistung verwendet, kann dadurch die Dynamik der Leistungseinstellung auch die Dynamik der Blattwinkelvorgabe beeinflussen.

Gemäß einer Ausführungsform wird somit für das Verfahren vorgeschlagen, dass in dem Drehzahl-Leistungsregler eine erste Drehzahl-Leistungskennlinie für den Normalbetrieb und eine zweite Drehzahlleistungskennlinie für den reduzierten Betrieb hinterlegt sind und je nach Betriebsart ausgewählt werden und dass in dem Leistungsblattwinkelregler eine erste Leistungs-Blattwinkelkennlinie für den Normalbetrieb und eine zweite Leistungs-Blattwinkelkennlinie für den reduzierten Betrieb hinterlegt sind und je nach Betriebsart ausgewählt werden. Es werden hier somit Kennlinien für beide Regler hinterlegt, wie oben beschrieben wurde.

Um zwischen Normalbetrieb und reduziertem Betrieb auszuwählen, wird für beide Betriebsarten in beiden Reglern jeweils eine Kennlinie hinterlegt. Die Kennlinien beider Regler oder eines der beiden Regler können auch abschnittsweise übereinstimmen. Zum Auswählen zwischen Normalbetrieb und reduziertem Betrieb braucht nur in jedem der beiden Regler die entsprechende Kennlinie ausgewählt zu werden. Vorzugsweise sind weitere Kennlinien hinterlegt, wenn noch weitere Betriebsarten realisiert werden sollen.

Erfindungsgemäß wird außerdem eine Windenergieanlage vorgeschlagen, die einen Rotor mit Rotorblättern mit verstellbarem Blattwinkel aufweist und mit einem Verfahren gemäß wenigstens einer der vorstehend beschriebenen Ausführungsformen betrieben wird. Insbesondere ist in der Windenergieanlage eine Betriebsführung implementiert, die nach wenigstens einem Verfahren gemäß einer der vorstehend beschriebenen Ausführungsformen arbeitet.

Vorzugsweise ist eine Windenergieanlage dadurch gekennzeichnet, dass sie einen Drehzahl-Leistungsregler umfasst, der dazu vorbereitet ist, eine von der Windenergieanlage zu erzeugende Leistung (P) in Abhängigkeit einer erfassten Drehzahl vorzugeben, und dass sie ein Leistungsstellmittel umfasst, das dazu vorbereitet ist, die von dem Drehzahl-Leistungsregler vorgegebene Leistung einzustellen. Außerdem umfasst sie gemäß dieser Ausführungsform einen Leistungs-Blattwinkelregler, der dazu vorbereitet ist, den einzustellenden Blattwinkel in Abhängigkeit der von dem Drehzahl-Leistungsregler vorgegebenen Leistung einzustellen, oder in Abhängigkeit der von dem Leistungsstellmittel eingestellten Leistung vorzugeben, und sie umfasst Blattverstelleinheiten, die dazu vorbereitet sind, den vorgegebenen Blattwinkel der Rotorblätter einzustellen. Die Leistungseinstellung und die Blattwinkeleinstellung können mit diesen Elementen der Windenergieanlage so durchgeführt werden, wie oben im Zusammenhang mit dem Verfahren erläutert wurde.

Gemäß einer Ausführungsform ist die Windenergieanlage dadurch gekennzeichnet, dass in dem Drehzahl-Leistungsregler eine erste Drehzahl-Leistungskennlinie für den Normalbetrieb und eine zweite Drehzahlleistungskennlinie für den reduzierten Betrieb hinterlegt sind und je nach Betriebsart ausgewählt werden und dass in dem Leistungsblattwinkelregler eine erste Leistungs-Blattwinkelkennlinie für den Normalbetrieb und eine zweite Leistungs-Blattwinkelkennlinie für den reduzierten Betrieb hinterlegt sind und je nach Betriebsart ausgewählt werden. Hiermit kann die Auswahl eines normalen oder in der Leistung reduzierten Betriebs einfach durch Auswahl der entsprechenden Kennlinien erfolgen.

Außerdem wird ein Windpark mit mehreren Windenergieanlagen vorgeschlagen, von denen wenigstens eine Windenergieanlage wie vorstehend gemäß einer Ausführungsform beschrieben betrieben wird, insbesondere eine genannte Betriebsführung implementiert hat.

Auch bei einem Windpark kann es vorkommen, dass dieser bspw. in der Nähe von Siedlungen aufgestellt ist und eine begrenzte Schallemission berücksichtigen muss. Dann ist es besonders wichtig, dass der Ertrag jeder Windenergieanlage hoch ist, so dass sich solche Verbesserungen des Ertrags aufsummieren. Insbesondere ist ein Windpark ein solcher, der alle seine Windenergieanlagen über einen gemeinsamen Netzanschlusspunkt in ein elektrisches Versorgungsnetz einspeisen lässt. Durch eine Ertragssteigerung, also insbesondere Leistungssteigerung, kann auch eine Netzstabilisierung erreicht werden bzw. eine Netzdestabilisierung verhindert werden. Wird bspw. für einen ganzen Windpark oder zumindest mehrere Windenergieanlagen des Windparks eine Schallreduzierung des Nachts gefordert, kann dies zu einem großen Leistungsabfall führen. Müssen bspw. alle Windenergieanlagen zu einer bestimmten Zeit ihre Leistung reduzieren, summiert sich diese Leistungsreduzierung auf und macht sich durch die gemeinsame Einspeisung über den gemeinsamen Netzanschlusspunkt möglicherweise in dem elektrischen Versorgungsnetz bemerkbar. Eine Ertragssteigerung würde hierbei gleichzeitig erreichen, dass auch die Leistungsreduzierung deutlich geringer ausfällt.

Die vorgeschlagene Lösung lässt sich an drehzahlvariablen, pitchgesteuerten Windenergieanlagen realisieren, die mit unterschiedlichen Betriebskennlinien betrieben werden können, wobei vorzugsweise jeder Betriebskennlinie eine eigene Pitchkennlinie zugeordnet wird.

Mit der erfindungsgemäßen Lösung wird eine Erhöhung besonders der Jahreserträge einer pitchgesteuerten, drehzahlvariablen Windenergieanlage angestrebt, wenn die Windenergieanlage gegenüber dem leistungsoptimierten Betrieb, also dem Normalbetrieb, mit reduzierter Nennleistung und Drehzahl betrieben wird, um einen geforderten maximalen Schallleistungspegel nicht zu überschreiten.

Die Erfindung wird nun nachfolgend anhand von Ausführungsformen unter Bezugnahme auf die begleitenden Figuren näher erläutert.
- Figur 1: zeigt eine Windenergieanlage in einer perspektivischen Darstellung.
- Figur 2: zeigt schematisch einen Windpark.
- Figur 3: stellt verschiedene Betriebskennlinien gegenüber.
- Figur 4: stellt verschiedene Verläufe für Schnelllaufzahlen und für Blattwinkel gegenüber.
- Figur 5: vergleicht zwei Leistungsverläufe.
- Figur 6: zeigt in Abhängigkeit der Windgeschwindigkeit erzielbare Erhöhungen der Jahreserträge.
- Figur 7: zeigt schematisch eine Regelungsstruktur zum Betreiben der Windenergieanlage im Teillastbereich.

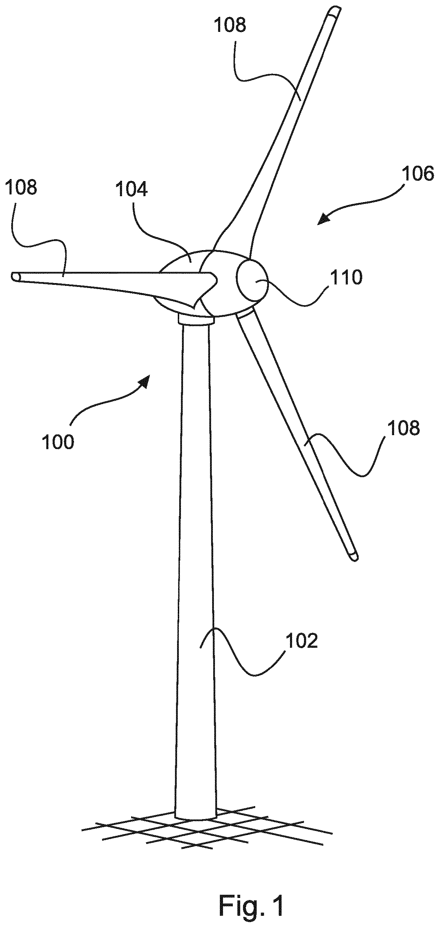

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

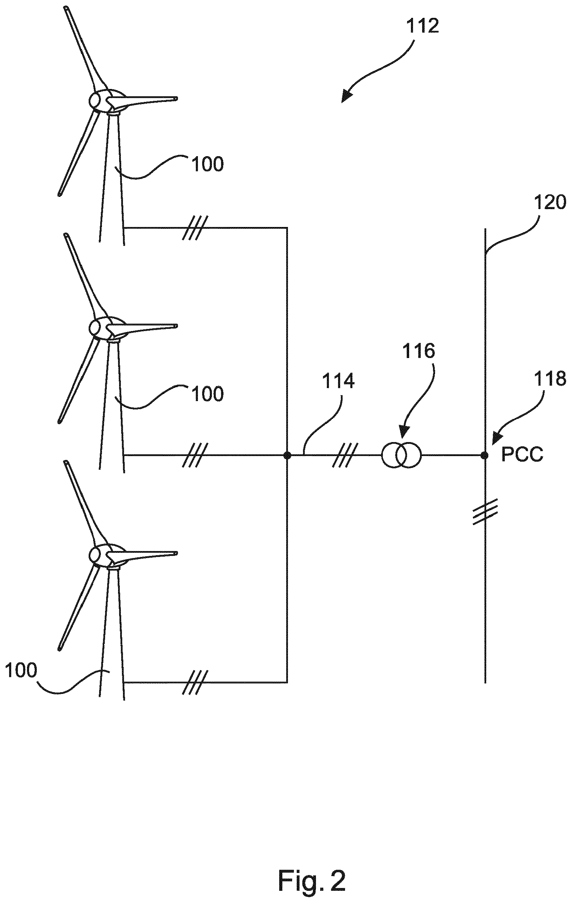

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

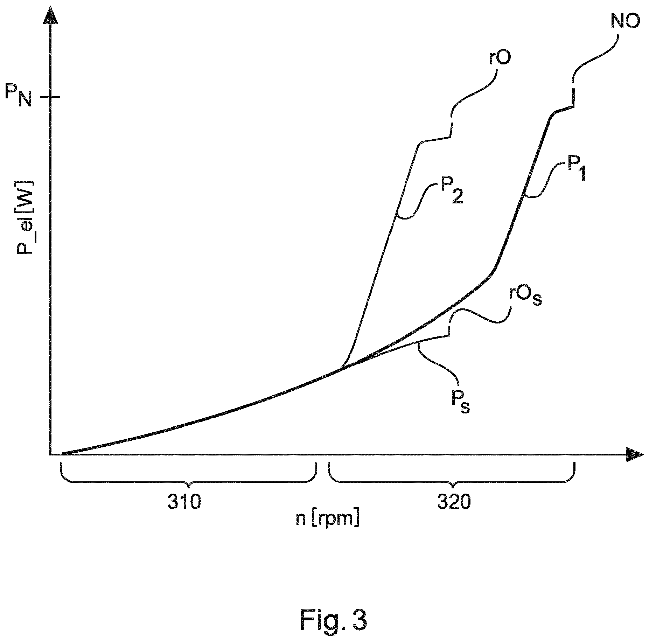

Figur 3 zeigt verschiedene Betriebskennlinien am Beispiel einer Windenergieanlage. Die Kennlinien sind über der Drehzahl aufgetragen. Diese Betriebskennlinien zeigen somit den funktionalen Zusammenhang zwischen der elektrischen Ausgangsleistung Pₑₗ der Windenergieanlage und der Rotordrehzahl n, die bei einer getriebelosen Windenergieanlage, die hier sämtlichen Figuren zugrundeliegt, der Generatordrehzahl entspricht. Als P₁ wird die Kennlinie in Figur 3 bezeichnet, die einem leistungsoptimalen Betriebsmodus zugrundeliegt, nämlich einem Normalbetrieb. Diese Kennlinie bezeichnet somit die erste Betriebskennline. Als Pₛ ist eine Betriebskennlinie gezeichnet, bei der ein leistungsreduzierter Betriebsmodus vorliegt, der zu einem prognostizierten Schallleistungspegel bezogen auf die Windgeschwindigkeit in Nabenhöhe gehört. Für diese Betriebskennline Pₛ liegt eine reduzierte Nenndrehzahl, bei der der prognostizierte Schallleistungspegel eingehalten wird, vor.

Diese beiden Betriebskennlinien P₁ und Pₛ sind im Wesentlichen identisch, außer dass die Betriebskennlinie Pₛ früher endet und kurz vorher noch die Betriebskennlinie P₁ nach unten verlässt, um die reduzierte Nenndrehzahl nicht zu überschreiten.

Zu diesem Vergleichsverlauf P_{S} abweichend wird nun die Betriebskennlinie P₂ vorgeschlagen, die die erfindungsgemäße zweite Betriebskennlinie darstellt und ein entsprechend dem begrenzten Betrieb zugeordnet ist. Bei dieser Kennlinie wird bereits bei einer niedrigen Drehzahl die Kennlinie P₁ und damit auch die leistungsoptimale Teillastschnelllaufzahl verlassen, um mit einem gleichen Gradienten dPₑₗ/dn wie bei der Betriebskennlinie P₁ die bei der reduzierten Drehzahl maximal erreichbare, reduzierte Nennleistung des in der untersuchten Windenergieanlage verbauten Generators zu erreichen.

Es ist somit in der Figur 3 zu erkennen, dass die zweite Betriebskennlinie P₂ ab einem bestimmten Drehzahlbereich eine höhere Leistung aufweist, als die erste Betriebskennlinie P₁.

Diese zweite Betriebskennlinie P₂ verlässt somit an der genannten Stelle die erste Betriebskennlinie P₁, um einen reduzierten Betriebspunkt rO anzusteuern, der zwar eine geringere Leistung aufweist, als der Nennbetriebspunkt NO, aber deutlich mehr Leistung aufweist, als der reduzierte Vergleichsbetriebspunkt rOₛ.

In der Figur 3 ist auch zu erkennen, dass die erste und zweite Betriebskennlinie P₁ und P₂ in einem ersten Drehzahlbereich 310 zusammenlaufen und in einem zweiten Drehzahlbereich 320 nicht mehr zusammenlaufen und dort die zweite Betriebskennlinie, insoweit sie jedenfalls überhaupt existiert, größere Leistungswerte aufweist, und für die Betriebsführung als größere Leistungswerte vorgibt.

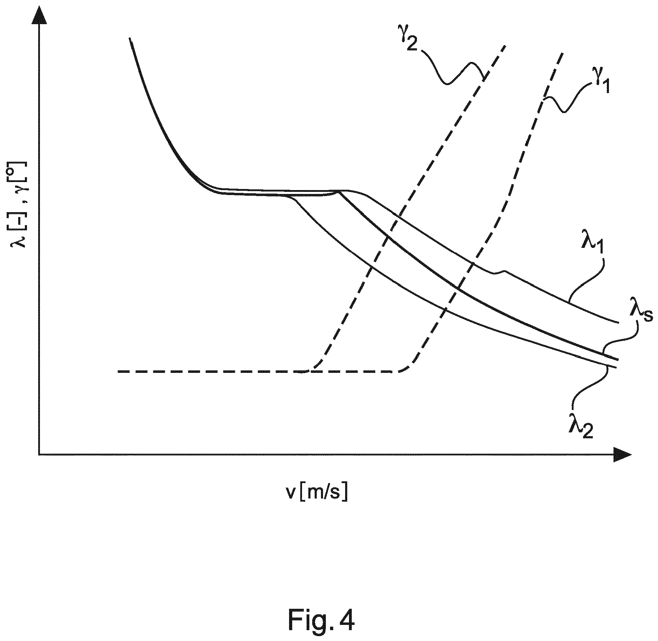

Figur 4 zeigt zunächst drei Schnelllaufzahlen *λ*₁, *λ*₂ und *λₛ*. Diese Schnelllaufzahlen sind über die Windgeschwindigkeit v in m/s abgetragen. Außerdem sind für die erste und zweite Betriebskennlinie die Blattwinkel *γ*₁ und *γ*₂ eingezeichnet. Figur 4 zeigt somit Schnelllaufzahlverläufe und Blattwinkelverläufe beim Betrieb der Windenergieanlage mit unterschiedlichen Kennlinien.

An den dargestellten Verläufen der Schnelllaufzahlen erkennt man, dass mit dem erfindungsgemäß vorgeschlagenen Betrieb der Windenergieanlage die optimale Schnelllaufzahl bereits bei kleinerer Windgeschwindigkeit verlassen wird. Die Windenergieanlage weist dann auch bis zum Erreichen der Nennwindgeschwindigkeit kleinere Schnelllaufzahlen auf, als das im Normalbetrieb der Fall ist. Besonders ist zu erkennen, dass die Schnelllaufzahl gemäß der Kennlinie *λ*₂ bei einer bestimmten Windgeschwindigkeit ein Plateau verlässt und dann immer einen kleineren Wert gegenüber den anderen Schnelllaufzahlverläufen beibehält, insbesondere auch gegenüber dem Schnelllaufzahlverlauf *λ*₁ des Normalbetriebs. Aber auch gegenüber der Schnelllaufzahl *λₛ* und damit im Vergleich zur Betriebskennlinie Pₛ gemäß Figur 3, die als Vergleichskennlinie angegeben ist, ist die Schnelllaufzahl der vorgeschlagenen Lösung *λ*₂ geringer.

Zudem sind in Figur 4 die Winkelverläufe zu erkennen, demnach bei der zweiten Betriebskennlinie der entsprechenden Blattwinkel *γ*₂bereits bei einer niedrigen Windgeschwindigkeit erhöht wird und dadurch wird auch die in Figur 3 gezeigte zweite Kennlinie P₂ unterstützt, die entsprechend frühzeitig die erste Kennlinie P₁ des Normalbetriebs verlässt.

Der Normalbetrieb verändert seinen Blattwinkel *γ*₁ allerdings auch bereits im Teillastbetrieb, also im Teillastbereich, allerdings erst bei einer höheren Windgeschwindigkeit als im reduzierten Betrieb. Der Blattwinkel des reduzierten Betriebs wird also deutlich früher als der Blattwinkel des Normalbetriebs verändert.

Ein wichtiger, zumindest bevorzugter Bestandteil der vorgeschlagenen Lösung ist daher, dass mit der Änderung der Betriebskennlinie auch eine Änderung der Pitchkennlinie einhergeht. Als Pitchkennlinie wird der in der Anlagensteuerung hinterlegte Zusammenhang zwischen der elektrischen Ausgangsleistung Pₑₗ und dem Pitchwinkel der Rotorblätter bezeichnet, hier also *γ*₁ bzw. *γ*₂. Die Pitchkennlinie sollte deshalb angepasst werden, weil ansonsten bei der vorgeschlagenen bzw. sich ergebenden Absenkung der Schnelllaufzahlen im Betrieb mit der zweiten Betriebskennlinie mit Strömungsablösungen am Rotorblatt zu rechnen wäre. Diese können sich leistungsreduzierend und schallpegelerhöhend auswirken. Somit wird vorzugsweise nicht nur eine zweite Betriebskennlinie, sondern auch eine zweite Pitchkennlinie vorgeschlagen.

Entsprechend werden die Pitchkennlinien, also die Verläufe der Blattwinkel *γ*₁ und *γ*₂ vorgeschlagen, die beispielhaft in Figur 4 gezeigt sind. Es ist dort deutlich zu sehen, dass bei deutlich kleineren Windgeschwindigkeiten mit dem Pitchen der Anlage für den reduzierten Betrieb begonnen wird und die Windenergieanlage mit deutlich höheren Pitchwinkeln betrieben wird. Es wird darauf hingewiesen, dass Blattwinkel und Pitchwinkel, oder einfach Pitch, als synonyme Begriffe verwenden werden können. Entsprechend ist eine Pitchkennlinie auch eine Blattwinkelkennlinie.

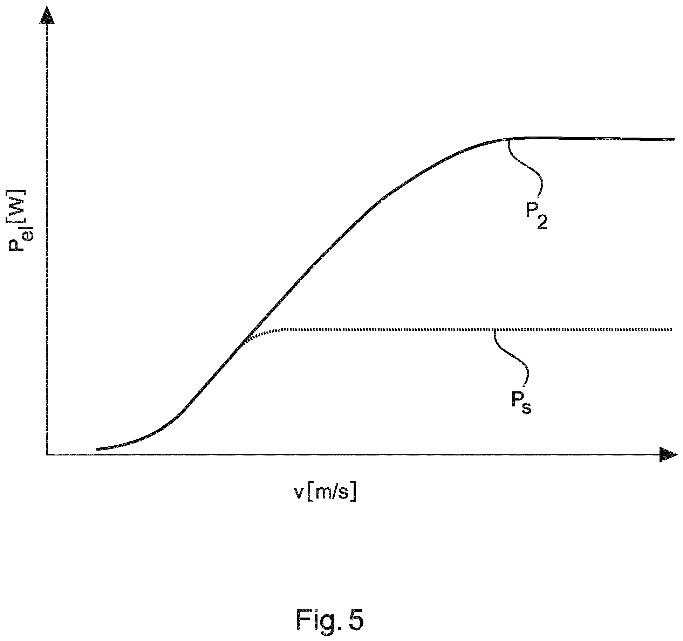

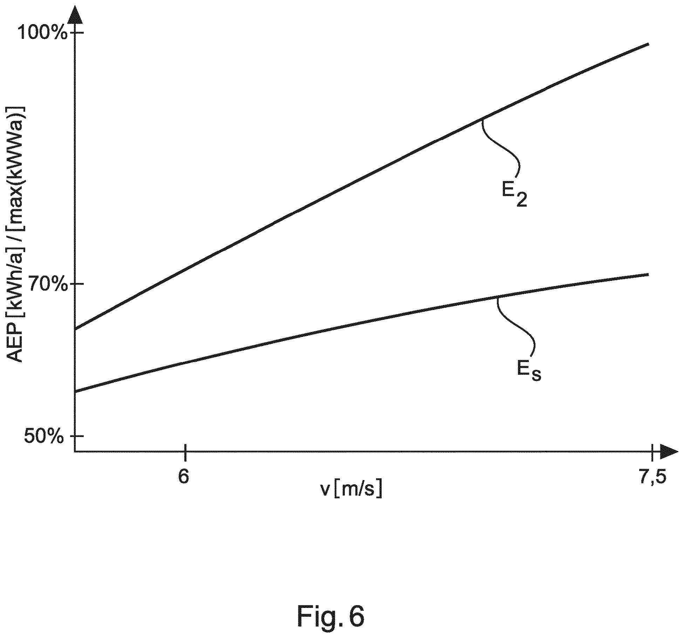

Die Figuren 5 und 6 zeigen nun Leistungskurven und Jahreserträge mit einer Vergleichsbetriebskennlinie, nämlich gemäß Pₛ der Figur 3 und gemäß der vorgeschlagenen zweiten Betriebskennlinie P₂ gemäß Figur 3.

In Figur 5 ist dafür die Leistung P₂ gemäß vorgeschlagener zweiter Betriebskennlinie und die Leistung Pₛ gemäß Vergleichsbetriebskennlinie eingezeichnet. Die Bezeichnungen sind identisch mit denen der Figur 3, weil in beiden Fällen die entsprechende Leistung P₂ bzw. Pₛ gezeigt ist, lediglich gegenüber unterschiedlichen Abhängigkeiten, nämlich der Drehzahl n in Figur 3 und der Windgeschwindigkeit v gemäß Figur 5. Figur 5 zeigt dabei sehr deutlich den erreichbaren Leistungsgewinn der zweiten Betriebskennlinie P₂.

Entsprechend sind in Figur 6 etwa prognostizierte Jahreserträge E₂ für die zweite Betriebskennlinie bzw. E_{S} für die Vergleichsbetriebskennlinie eingezeichnet. Deutlich zeigen sich die Zugewinne in der Leistungskurve in Figur 5 und im Jahresertrag in Figur 6 bei Betrieb der Anlage gemäß der neuen, vorgeschlagenen zweiten Betriebskennlinie. Für den beispielhaften Fall der untersuchten Windenergieanlage könnte sich bei einer mittleren Jahreswindgeschwindigkeit von 7,5 m/s unter der Annahme der Rayleigh-Verteilung des Windes ein Zuwachs im Jahresertrag in der Größenordnung von etwa 30 % ergeben.

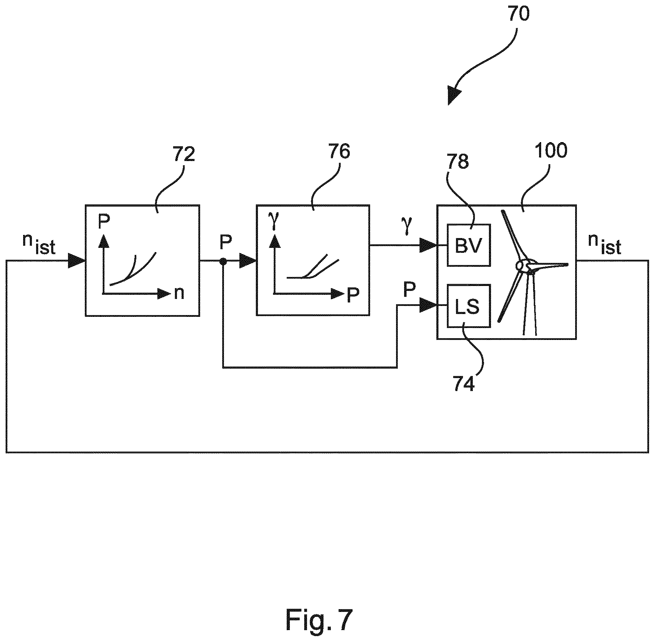

Figur 7 zeigt schematisch eine Regelungsstruktur 70 zum Betreiben einer Windenergieanlage 100 im Teillastbereich. Sie umfasst einen Drehzahl-Leistungsregler 72, der eine von der Windenergieanlage 100 zu erzeugende Leistung P in Abhängigkeit der erfassten Drehzahl n, also der Ist-Drehzahl vorgibt. Dazu wird dieser Leistungswert P an ein Leistungsstellmittel 74 gegeben, das hier nur schematisch als Block 74 eingezeichnet ist.

Dieses Leistungsstellmittel kann bspw. ein Stromsteller zum Einstellen eines Erregerstromes sein, oder einen solchen beinhalten. Das Leistungsstellmittel 74 kann aber bspw. auch oder zusätzlich durch einen gesteuerten Gleichrichter oder einen nachgelagerten Hochsetzsteller realisiert sein. Das Leistungsstellmittel 74 ist Teil der Windenergieanlage 100, die hier ebenfalls nur schematisch dargestellt ist.

Das Leistungsstellmittel 74 stellt die vorgegebene Leistung P ein und daraus resultiert, auch in Abhängigkeit des Windes, die Drehzahl n bzw. nᵢₛₜ, die zum Drehzahl-Leistungsregler 72 zurückgeführt wird.

Die vorgegebene Leistung P wird außerdem in den Leistungs-Blattwinkelregler 76 eingegeben, der davon abhängig einen Blattwinkel y vorgibt. Der Leistungs-Blattwinkelregler 76 bestimmt den einzustellenden Blattwinkel y in Abhängigkeit der von dem Drehzahl-Leistungsregler 76 vorgegebenen Leistung P. Der so bestimmte Blattwinkel y wird dann an Blattverstelleinheiten 78 übergeben, die Teil der Windenergieanlage 100 sind und von denen hier repräsentativ nur eine Blattverstelleinheit 78 eingezeichnet ist. Die stellen dann den vorgegebenen Blattwinkel der Rotorblätter ein.

Der Drehzahl-Leistungsregler 72 und der Leistungs-Blattwinkelregler 76 weisen jeweils zwei Kennlinien auf, was in dem Blocksymbol jeweils angedeutet ist, nämlich eine für den Normalbetrieb und eine für den reduzierten Betrieb. Wird nun einer dieser Betriebsweisen ausgewählt, wird in beiden Reglern, also in dem Drehzahl-Leistungsregler 72 und dem Leistungs-Blattwinkelregler 76 die entsprechende Kennlinie ausgewählt.

Eine Überprüfung der Stabilität einer solchen Regelungsstrecke der Regelungsstruktur 70 kann ggf. durch bekannte regelungstechnische Verfahren, wie z.B. die Methode der Harmonischen Balance durchgeführt werden. Dazu kommt in Betracht, eine solche Untersuchung in einer Simulation durchzuführen.

## Patentansprüche

1. Verfahren zum Betreiben einer Windenergieanlage (100) mit einem Rotor (106) mit Rotorblättern (108) mit verstellbarem Blattwinkel, wobei die Windenergieanlage (100)
- zum Abgeben einer anlagenspezifischen Maximalleistung in einem Volllastbetrieb und
- zum Abgeben einer geringeren Leistung bis zu dieser anlagenspezifischen Maximalleistung in einem Teillastbetrieb betrieben wird, und wobei
die Windenergieanlage (100) im Teillastbetrieb wahlweise in einem Normalbetrieb oder einem begrenzten Betrieb arbeitet und jeweils eine Betriebskennlinie zu Grunde gelegt wird, die einen Zusammenhang zwischen einer Drehzahl (n) des Rotors (106) und der abzugebenden Leistung vorgibt, wobei
- zum Betreiben der Windenergieanlage (100) in dem Normalbetrieb eine erste Betriebskennlinie vorgesehen ist, und
- zum Betreiben der Windenergieanlage (100) in dem begrenzten Betrieb wenigstens eine zweite Betriebskennlinie vorgesehen ist und
- die zweite Betriebskennlinie für wenigstens einen Drehzahlbereich eine höhere Leistung vorsieht als die erste Betriebskennlinie für diesen Drehzahlbereich vorsieht.

2. Verfahren nach Anspruch 1,
**dadurch gekennzeichnet, dass**
für den Normalbetrieb eine erste Leistungs-Blattwinkelkennlinie und für den reduzierten Betrieb eine zweite Leistungs-Blattwinkelkennlinie vorgesehen sind und die erste Leistungs-Blattwinkelkennlinie im Normalbetrieb zusammen mit der ersten Betriebskennlinie ausgewählt wird und die zweite Leistungs-Blattwinkelkennlinie im begrenzten Betrieb zusammen mit der zweiten Betriebskennlinie ausgewählt wird.

3. Verfahren nach Anspruch 2,
**dadurch gekennzeichnet, dass**
die erste und die zweite Leistungs-Blattwinkelkennlinie so vorgegeben werden, dass ein Profilanstellwinkel einen vorbestimmten Wert nicht überschreitet.

4. Verfahren nach einem der vorstehenden Ansprüche,
**dadurch gekennzeichnet, dass**
im Teillastbetrieb
- wenigstens ein erster und ein zweiter Drehzahlbereich vorgesehen sind und
- der erste Drehzahlbereich (310) Drehzahlen bis zu einer ersten Bereichsdrehzahl umfasst und
- der zweite Drehzahlbereich (320) Drehzahlen oberhalb dieser ersten Bereichsdrehzahl umfasst, und
- die erste und die zweite Betriebskennlinie in dem ersten Drehzahlbereich übereinstimmen und die zweite Betriebskennlinie in dem zweiten Drehzahlbereich von der ersten Betriebskennlinie so abweicht, dass sie für gleiche Drehzahlwerte jeweils größere Leistungswerte vorgibt, als die erste Betriebskennlinie zu denselben Drehzahlwerten.

5. Verfahren nach einem der vorstehenden Ansprüche,
**dadurch gekennzeichnet, dass**
in dem begrenzten Betrieb die Drehzahl einen vorgegebenen Drehzahlgrenzwert nicht überschreiten darf und die zweite Betriebskennlinie nur bis zu diesem Drehzahlgrenzwert vorgesehen ist und die zweite Betriebskennlinie dabei für Drehzahlen unterhalb dieses Drehzahlgrenzwertes eine höhere Leistung vorsieht als die erste Betriebskennlinie.

6. Verfahren nach einem der vorstehenden Ansprüche,
**dadurch gekennzeichnet, dass**
der Normalbetrieb und der begrenzte Betrieb jeweils durch einen Verlauf der Schnelllaufzahl (*λ*) in Abhängigkeit der Windgeschwindigkeit charakterisiert sind und der Verlauf der Schnelllaufzahl des Normalbetriebs zumindest abschnittsweise oberhalb des Verlaufs der Schnelllaufzahl des begrenzten Betriebs liegt.

7. Verfahren nach einem der vorstehenden Ansprüche,
**dadurch gekennzeichnet, dass**
wenigstens für den begrenzten Betrieb ein Verstellen des Blattwinkels vor Erreichen eines bzw. des Drehzahlgrenzwertes vorgesehen ist.

8. Verfahren nach einem der vorstehenden Ansprüche,
**dadurch gekennzeichnet, dass**
- beim Betreiben der Windenergieanlage im Normalbetrieb bis zu einer ersten Referenzwindgeschwindigkeit oder bis zum Erreichen einer ersten Referenzdrehzahl der Blattwinkel einen konstanten Wert aufweist und dann mit weiter steigender Windgeschwindigkeit bzw. mit weiter steigender Drehzahl und in Abhängigkeit der Windgeschwindigkeit bzw. der Drehzahl der Blattwinkel erhöht wird und
- beim Betreiben der Windenergieanlage im begrenzten Betrieb bis zu einer zweiten Referenzwindgeschwindigkeit oder bis zum Erreichen einer zweiten Referenzdrehzahl der Blattwinkel einen konstanten Wert aufweist und dann mit weiter steigender Windgeschwindigkeit bzw. mit weiter steigender Drehzahl und in Abhängigkeit der Windgeschwindigkeit bzw. der Drehzahl der Blattwinkel erhöht wird, wobei
- die erste Referenzwindgeschwindigkeit bzw. die erste Referenzdrehzahl größer ist als die zweite Referenzwindgeschwindigkeit bzw. als die zweite Referenzdrehzahl.

9. Verfahren nach einem der vorstehenden Ansprüche,
**dadurch gekennzeichnet, dass**
- die erste Betriebskennlinie dazu vorbereitet ist, die Windenergieanlage zu einem Betriebspunkt mit Nennleistung zu führen und in einem Abschnitt vor oder bis zu diesem Betriebspunkt einen ersten Leistungsgradienten (dP/dn) in Bezug auf die Drehzahl aufweist, und
- die zweite Betriebskennlinie dazu vorbereitet ist, die Windenergieanlage zu einem reduzieren Betriebspunkt mit im Vergleich zur Nennleistung reduzierter Leistung zu führen und in einem Abschnitt vor oder bis zu diesem reduzierten Betriebspunkt einen zweiten Leistungsgradienten (dP/dn) in Bezug auf die Drehzahl aufweist, wobei
- der erste und der zweite Leistungsgradient im Wesentlichen gleich sind.

10. Verfahren nach einem der vorstehenden Ansprüche,
**dadurch gekennzeichnet, dass**
zum Steuern der Windenergieanlage im Teillastbetrieb
- mittels eines Drehzahl-Leistungsreglers eine von der Windenergieanlage zu erzeugende Leistung (P) in Abhängigkeit einer erfassten Drehzahl vorgegeben wird,
- die von dem Drehzahl-Leistungsregler vorgegebene Leistung an ein Leistungsstellmittel der Windenergieanlage gegeben wird, um diese vorgegebene Leistung einzustellen,
- mittels eines Leistungs-Blattwinkelreglers der einzustellende Blattwinkel in Abhängigkeit der von dem Drehzahl-Leistungsregler vorgegebenen Leistung, oder in Abhängigkeit der von dem Leistungsstellmittel eingestellten Leistung vorgegeben wird und
- der vorgegebene Blattwinkel zum Verstellen der Rotorblätter an Blattverstelleinheiten der Windenergieanlage gegeben wird.

11. Verfahren nach Anspruch 10,
**dadurch gekennzeichnet, dass**
- in dem Drehzahl-Leistungsregler eine erste Drehzahl-Leistungskennlinie für den Normalbetrieb und eine zweite Drehzahlleistungskennlinie für den reduzierten Betrieb hinterlegt sind und je nach Betriebsart ausgewählt werden und
- in dem Leistungsblattwinkelregler eine bzw. die erste Leistungs-Blattwinkelkennlinie für den Normalbetrieb und eine bzw. die zweite Leistungs-Blattwinkelkennlinie für den reduzierten Betrieb hinterlegt sind und je nach Betriebsart ausgewählt werden.

12. Windenergieanlage (100) mit einem Rotor (106) mit Rotorblättern (108) mit verstellbarem Blattwinkel, wobei die Windenergieanlage (100) dazu vorbereitet ist, ein Verfahren gemäß einem der vorstehenden Ansprüche auszuführen.

13. Windenergieanlage (100) nach Anspruch 12,
**dadurch gekennzeichnet, dass**
sie folgendes umfasst:
- einen Drehzahl-Leistungsregler, dazu vorbereitet, eine von der Windenergieanlage zu erzeugende Leistung (P) in Abhängigkeit einer erfassten Drehzahl vorzugeben,
- ein Leistungsstellmittel, dazu vorbereitet, die von dem Drehzahl-Leistungsregler vorgegebene Leistung einzustellen,
- einen Leistungs-Blattwinkelregler, dazu vorbereitet, den einzustellenden Blattwinkel in Abhängigkeit der von dem Drehzahl-Leistungsregler vorgegebenen Leistung, oder in Abhängigkeit der von dem Leistungsstellmittel eingestellten Leistung vorzugeben und
- Blattverstelleinheiten, dazu vorbereitet, den vorgegebenen Blattwinkel der Rotorblätter einzustellen.

14. Windenergieanlage nach Anspruch 13,
**dadurch gekennzeichnet, dass**
- in dem Drehzahl-Leistungsregler eine erste Drehzahl-Leistungskennlinie für den Normalbetrieb und eine zweite Drehzahlleistungskennlinie für den reduzierten Betrieb hinterlegt sind und je nach Betriebsart ausgewählt werden und
- in dem Leistungsblattwinkelregler eine erste Leistungs-Blattwinkelkennlinie für den Normalbetrieb und eine zweite Leistungs-Blattwinkelkennlinie für den reduzierten Betrieb hinterlegt sind und je nach Betriebsart ausgewählt werden.

15. Windpark (112) mit mehreren Windenergieanlagen (100), von denen wenigstens eine Windenergieanlage (100) gemäß einem der Ansprüche 12 bis 14 ausgebildet ist.

## Claims

1. A method for operating a wind power installation (100) having a rotor (106) with rotor blades (108) with an adjustable blade angle, wherein the wind power installation (100)
- is operated in a full-load mode for delivering a system-specific maximum power and
- in a partial-load mode for delivering a lower power, up to this system-specific maximum power, and wherein
the wind power installation (100) in the partial-load mode operates according to choice in a normal mode or a limited mode, in each case based on an operating characteristic, which specifies a relationship between a rotational speed (n) of the rotor (106) and the power to be delivered, wherein
- a first operating characteristic is provided for operating the wind power installation (100) in the normal mode, and
- at least one second operating characteristic is provided for operating the wind power installation (100) in the limited mode and
- the second operating characteristic provides a higher power for at least one rotational speed range than the first operating characteristic for this rotational speed range.

2. The method as claimed in claim 1,
**characterized in that**
a first power/blade-angle characteristic is provided for the normal mode and a second power/blade-angle characteristic is provided for the reduced mode, and the first power/blade-angle characteristic is selected together with the first operating characteristic in the normal mode and the second power/blade-angle characteristic is selected together with the second operating characteristic in the limited mode.

3. The method as claimed in claim 2,
**characterized in that**
the first and second power/blade-angle characteristics are specified in such a way that a profile angle of attack does not exceed a predetermined value.

4. The method as claimed in one of the preceding claims,
**characterized in that**
in the partial-load mode
- at least a first rotational speed range and a second rotational speed range are provided and
- the first rotational speed range (310) comprises rotational speeds up to a first range speed and
- the second rotational speed range (320) comprises rotational speeds above this first range speed, and
- the first and second operating characteristics coincide in the first rotational speed range and the second operating characteristic deviates from the first operating characteristic in the second rotational speed range such that, for the same rotational speed values, it specifies greater power values in each case than the first operating characteristic in relation to the same rotational speed values.

5. The method as claimed in one of the preceding claims,
**characterized in that**
in the limited mode, the rotational speed must not exceed a specified rotational speed limit value and the second operating characteristic is only provided up to this rotational speed limit value, and the second operating characteristic provides a higher power than the first operating characteristic for rotational speeds below this rotational speed limit value.

6. The method as claimed in one of the preceding claims,
**characterized in that**
the normal mode and the limited mode are respectively **characterized by** a variation of the tip speed ratio (*λ*) in dependence on the wind speed and, at least in a certain portion, the variation of the tip speed ratio of the normal mode lies above the variation of the tip speed ratio of the limited mode.

7. The method as claimed in one of the preceding claims,
**characterized in that**
at least for the limited mode, an adjustment of the blade angle before reaching a or the rotational speed limit value is provided.

8. The method as claimed in one of the preceding claims,
**characterized in that**
- when operating the wind power installation in the normal mode up to a first reference wind speed or until reaching a first reference rotational speed, the blade angle has a constant value, and then, as the wind speed increases further, or the rotational speed increases further, and in dependence on the wind speed or the rotational speed, the blade angle is increased, and
- when operating the wind power installation in the limited mode up to a second reference wind speed or until reaching a second reference rotational speed, the blade angle has a constant value, and then, as the wind speed increases further, or the rotational speed increases further, and in dependence on the wind speed or the rotational speed, the blade angle is increased, wherein
- the first reference wind speed or the first reference rotational speed is greater than the second reference wind speed or the second reference rotational speed, respectively.

9. The method as claimed in one of the preceding claims,
**characterized in that**
- the first operating characteristic is provided for guiding the wind power installation to an operating point with rated power and has in a portion before or up to this operating point a first power gradient (dP/dn) with respect to the rotational speed, and
- the second operating characteristic is provided for guiding the wind power installation to a reduced operating point with reduced power in comparison with the rated power and to have in a portion before or up to this reduced operating point a second power gradient (dP/dn) with respect to the rotational speed, wherein
- the first and second power gradients are substantially the same.

10. The method as claimed in one of the preceding claims,
**characterized in that**
for controlling the wind power installation in partial-load mode
- by means of a rotational-speed/power controller, a power (P) to be generated by the wind power installation is specified in dependence on a detected rotational speed,
- the power specified by the rotational-speed/power controller is passed to a power adjusting means of the wind power installation, in order to set this specified power,
- by means of a power/blade-angle controller, the blade angle to be set is specified in dependence on the power specified by the rotational-speed/power controller, or in dependence on the power set by the power adjusting means, and
- the blade angle specified for adjusting the rotor blades is passed to blade adjusting units of the wind power installation.

11. The method as claimed in claim 10,
**characterized in that**
- a first rotational-speed/power characteristic for the normal mode and a second rotational-speed/power characteristic for the reduced mode are stored in the rotational-speed/power controller and are selected according to the operating mode and
- a or the first power/blade-angle characteristic for the normal mode and a or the second power/blade-angle characteristic for the reduced mode are stored in the power/blade-angle controller and are selected according to the operating mode.

12. A wind power installation (100) having a rotor (106) with rotor blades (108) with an adjustable blade angle, wherein the wind power installation (100) is provided for performing a method according to one of the preceding claims.

13. The wind power installation (100) as claimed in claim 12,
**characterized in that**
it comprises the following:
- a rotational-speed/power controller, which is provided for specifying a power (P) to be generated by the wind power installation in dependence on a detected rotational speed,
- a power adjusting means, which is provided for setting the power specified by the rotational-speed/power controller,
- a power/blade-angle controller, which is provided for specifying the blade angle to be set in dependence on the power specified by the rotational-speed/power controller, or in dependence on the power set by the power adjusting means, and
- blade adjusting units, which are provided for setting the specified blade angle of the rotor blades.

14. The wind power installation as claimed in claim 13,
**characterized in that**
- a first rotational-speed/power characteristic for the normal mode and a second rotational-speed/power characteristic for the reduced mode are stored in the rotational-speed/power controller and are selected according to the operating mode and
- a first power/blade-angle characteristic for the normal mode and a second power/blade-angle characteristic for the reduced mode are stored in the power/blade-angle controller and are selected according to the operating mode.

15. A wind farm (112) with a number of wind power installations (100), of which at least one wind power installation (100) is formed as claimed in one of claims 12 to 14.

## Revendications

1. Procédé pour faire fonctionner une éolienne (100) avec un rotor (106) avec des pales de rotor (108) avec un angle de pale réglable, dans lequel l'éolienne (100)
- est actionnée pour délivrer une puissance maximale spécifique à l'éolienne dans un mode pleine charge et
- pour délivrer une puissance plus faible jusqu'à cette puissance maximale spécifique à l'éolienne dans un mode charge partielle, et dans lequel l'éolienne (100) travaille dans le mode charge partielle au choix dans un mode normal ou un mode limité et respectivement une caractéristique de fonctionnement est prise pour base, laquelle prédéfinit un rapport entre une vitesse de rotation (n) du rotor (106) et la puissance à délivrer, dans lequel
- pour faire fonctionner l'éolienne (100) dans le mode normal une première caractéristique de fonctionnement est prévue, et
- pour faire fonctionner l'éolienne (100) dans le mode limité au moins une seconde caractéristique de fonctionnement est prévue et
- la seconde caractéristique de fonctionnement pour au moins une plage de vitesses de rotation prévoit une puissance plus grande que la première caractéristique de fonctionnement ne prévoit pour cette plage de vitesses de rotation.

2. Procédé selon la revendication 1,
**caractérisé en ce que**
une première caractéristique d'angle de pale de puissance, pour le mode normal, et une seconde caractéristique d'angle de pale de puissance, pour le mode réduit, sont prévues et la première caractéristique d'angle de pale de puissance est sélectionnée dans le mode normal conjointement avec la première caractéristique de fonctionnement et la seconde caractéristique d'angle de pale de puissance est sélectionnée dans le mode limité conjointement avec la seconde caractéristique de fonctionnement.

3. Procédé selon la revendication 2,
**caractérisé en ce que**
la première et la seconde caractéristiques d'angle de pale de puissance sont prédéfinies de sorte qu'un angle d'incidence de profil ne dépasse pas une valeur prédéterminée.

4. Procédé selon l'une des revendications précédentes,
**caractérisé en ce que**
dans le mode charge partielle
- au moins une première et une seconde plage de vitesses de rotation sont prévues et
- la première plage de vitesses de rotation (310) comporte des vitesses de rotation jusqu'à une première vitesse de rotation de plage et
- la seconde plage de vitesses de rotation (320) comporte des vitesses de rotation supérieures à cette première vitesse de rotation de plage, et
- la première et la seconde caractéristique de fonctionnement coïncident dans la première plage de vitesses de rotation et la seconde caractéristique de fonctionnement dans la seconde plage de vitesses de rotation diverge de la première caractéristique de fonctionnement de sorte qu'elle prédéfinisse pour des valeurs de vitesses de rotation identiques respectivement des valeurs de puissance plus grandes que la première caractéristique de fonctionnement aux mêmes valeurs de vitesse de rotation.

5. Procédé selon l'une des revendications précédentes,
**caractérisé en ce que**
dans le mode limité la vitesse de rotation ne doit pas dépasser une valeur limite de vitesse de rotation prédéfinie et la seconde caractéristique de fonctionnement n'est prévue que jusqu'à cette valeur limite de vitesse de rotation et la seconde caractéristique de fonctionnement pour des vitesses de rotation inférieures à cette valeur limite de vitesse de rotation prévoit une puissance plus grande que la première caractéristique de fonctionnement.

6. Procédé selon l'une des revendications précédentes,
**caractérisé en ce que**
le mode normal et le mode limité sont caractérisés respectivement par une évolution de la vitesse spécifique (λ) en fonction de la vitesse du vent et l'évolution de la vitesse spécifique du mode normal se trouve au moins par section supérieure à l'évolution de la vitesse spécifique du mode limité.

7. Procédé selon l'une des revendications précédentes,
**caractérisé en ce que**
au moins pour le mode limité un réglage de l'angle de pale est prévu avant l'atteinte d'une ou de la valeur limite de vitesse de rotation.

8. Procédé selon l'une des revendications précédentes,
**caractérisé en ce que**
- lors du fonctionnement de l'éolienne dans le mode normal jusqu'à une première vitesse du vent de référence ou jusqu'à l'atteinte d'une première vitesse de rotation de référence, l'angle de pale présente une valeur constante et ensuite l'angle de pale est augmenté avec une vitesse du vent encore croissante ou avec une vitesse de rotation encore croissante et en fonction de la vitesse du vent ou de la vitesse de rotation et
- lors du fonctionnement de l'éolienne dans le mode limité jusqu'à une seconde vitesse du vent de référence ou jusqu'à l'atteinte d'une seconde vitesse de rotation de référence, l'angle de pale présente une valeur constante et ensuite l'angle de pale est augmenté avec une vitesse du vent encore croissante ou avec une vitesse de rotation encore croissante et en fonction de la vitesse du vent ou la vitesse de rotation, dans lequel
- la première vitesse du vent de référence ou la première vitesse de rotation de référence est supérieure à la seconde vitesse du vent de référence ou à la seconde vitesse de rotation de référence.

9. Procédé selon l'une des revendications précédentes,
**caractérisé en ce que**
- la première caractéristique de fonctionnement est préparée afin de guider l'éolienne à un point de fonctionnement avec une puissance nominale et présente dans une section avant ou jusqu'à ce point de fonctionnement un premier gradient de puissance (dP/dn) par rapport à la vitesse de rotation, et
- la seconde caractéristique de fonctionnement est préparée afin de guider l'éolienne à un point de fonctionnement réduit avec une puissance réduite par rapport à la puissance nominale et présente dans une section avant ou jusqu'à ce point de fonctionnement réduit un second gradient de puissance (dP/dn) par rapport à la vitesse de rotation, dans lequel
- le premier et le second gradient de puissance sont sensiblement identiques.

10. Procédé selon l'une des revendications précédentes,
**caractérisé en ce que**
pour la commande de l'éolienne dans le mode charge partielle
- une puissance (P) à générer par l'éolienne est prédéfinie au moyen d'un régulateur de puissance de vitesse de rotation en fonction d'une vitesse de rotation détectée,
- la puissance prédéfinie par le régulateur de puissance de vitesse de rotation est donnée à un moyen de réglage de puissance de l'éolienne afin de régler cette puissance prédéfinie,
- au moyen d'un régulateur d'angle de pale de puissance, l'angle de pale à régler est prédéfini en fonction de la puissance prédéfinie par le régulateur de puissance de vitesse de rotation, ou en fonction de la puissance réglée par le moyen de réglage de puissance et
- l'angle de pale prédéfini est donné pour le réglage des pales de rotor aux unités de réglage de pale de l'éolienne.

11. Procédé selon la revendication 10,
**caractérisé en ce que**
- dans le régulateur de puissance de vitesse de rotation, une première caractéristique de puissance de vitesse de rotation pour le mode normal et une seconde caractéristique de puissance de vitesse de rotation pour le mode réduit sont enregistrées et sont sélectionnées selon le type de fonctionnement et
- dans le régulateur d'angle de pale de puissance une ou la première caractéristique d'angle de pale de puissance pour le mode normal et une ou la seconde caractéristique d'angle de pale de puissance pour le mode réduit sont enregistrées et sont sélectionnées selon le type de fonctionnement.

12. Eolienne (100) avec un rotor (106) avec des pales de rotor (108) avec un angle de pale réglable, dans laquelle l'éolienne (100) est préparée afin d'effectuer un procédé selon l'une des revendications précédentes.

13. Eolienne (100) selon la revendication 12, **caractérisée en ce que**
elle comporte ce qui suit :
- un régulateur de puissance de vitesse de rotation préparé afin de prédéfinir une puissance (P) à générer par l'éolienne en fonction d'une vitesse de rotation détectée,
- un moyen de réglage de puissance préparé afin de régler la puissance prédéfinie par le régulateur de puissance de vitesse de rotation,
- un régulateur d'angle de pale de puissance préparé afin de prédéfinir l'angle de pale à régler en fonction de la puissance prédéfinie par le régulateur de puissance de vitesse de rotation, ou en fonction de la puissance réglée par le moyen de réglage de puissance et
- des unités de réglage de pale préparées afin de régler l'angle de pale prédéfini des pales de rotor.

14. Eolienne selon la revendication 13, **caractérisée en ce que**
- dans le régulateur de puissance de vitesse de rotation, une première caractéristique de puissance de vitesse de rotation pour le mode normal et une seconde caractéristique de puissance de vitesse de rotation pour le mode réduit sont enregistrées et sont sélectionnées selon le type de fonctionnement et
- dans le régulateur d'angle de pale de puissance, une première caractéristique d'angle de pale de puissance pour le mode normal et une seconde caractéristique d'angle de pale de puissance pour le mode réduit sont enregistrées et sont sélectionnées selon le type de fonctionnement.

15. Parc éolien (112) avec plusieurs éoliennes (100) dont au moins une éolienne (100) est réalisée selon l'une des revendications 12 à 14.
